# EUROPEAN PATENT APPLICATION

(11) **EP 4 525 491 A1**
(43) Date of publication of application: **19.03.2025**
(21) Application number: 23904791.3
(22) Date of filing: 25.08.2023
(51) Int. Cl.: H04W 4/80, G08C 17/02

(54) **BLUETOOTH CABINET CONTROL SYSTEM**

(30) Priority: 01.08.2023 CN 202310962787
(71) Applicant: Hangzhou Dongcheng Electronic Co., Ltd., Hangzhou, Zhejiang 310000 (CN)
(72) Inventor: GAO, Wenzhong, Hangzhou, Zhejiang 310000 (CN); LI, Ronghuan, Hangzhou, Zhejiang 310000 (CN); LAI, Jian, Hangzhou, Zhejiang 310000 (CN)
(74) Representative: Elzaburu S.L.P.
(86) International application number: PCT/CN2023/114832
(87) International publication number: WO 2025/025285

(57) **Abstract**

The present disclosure discloses a Bluetooth cabinet control system. In order to solve problems of inconvenient installation of power supply by commercial power and complicated structure and high costs of power supply by solar energy in the prior art, the Bluetooth cabinet control system includes a driving module, a communication module, a power supply module and a main control module, where the driving module includes a keyboard driving unit for typing in a signal for the main control module and door lock driving units for driving a cabinet door to open; the communication module includes a Bluetooth unit communicated with a user and a 4G/5G unit communicated with a server; the power supply module converts a same input power source into a power supply source adapting to each module unit; the main control module is connected with an enable of each of other module units, and controls the corresponding module unit to enable according to an operating command. The main control module is in a dormant state by default, and is woken up by a type-in signal of the keyboard driving unit or a Bluetooth connection signal of the Bluetooth unit. Operating conditions of each module unit is controlled by controlling the enable to enable, and energy consumption is greatly reduced.

## Description

### Technical Field

The present disclosure relates to the technical field of cabinet control, and in particular to a Bluetooth cabinet control system.

### Background Art

At present, with the rapid development of express business, various storage and access devices such as intelligent mailboxes, mail and express boxes and intelligent express cabinets have emerged in the market. The electricity of most express cabinets is supplied through a cabled power source. These storage and access devices generally adopt a power supply mode through commercial power. In a practical process of putting into use, there are problems of high construction and cable distribution costs, high electricity consumption costs, etc. The express cabinets cannot be installed in places where cable distribution is inconvenient outdoors, additionally, the daily maintenance and routing inspection work load of the route per se is great, and at the same time, there is certain potential safety hazards.

In the prior art, there are express cabinets which are additionally provided with other energy supply devices replacing the commercial power. For example, a novel energy-saving express cabinet which is disclosed in Chinese patent documents and has a publication patent number of CN112396770A includes a base. A cabinet body is fixedly installed in a middle portion of an upper end of the base, a front end of the cabinet body is movably connected with a plurality of groups of cabinet doors, an arc-shaped plate is fixedly installed in each of a middle side of a left portion of an upper end and a middle side of a right portion of the upper end of the cabinet body, sun shielding energy supply devices are jointly disposed at upper portions of opposite sides of the two arc-shaped plates, a water storage device is disposed at a rear portion of upper ends of the sun shielding energy supply device, an expansion squeezing device is disposed in a middle side of an upper portion of a rear end of the cabinet body, rolling devices are jointly disposed at opposite sides of two groups of fixing plates, and limiting stabilization devices are jointly disposed at opposite sides of two groups of fixing blocks. Although the power supply by a cabled power source may be replaced by an additional power supply device, the structure complexity is enhanced, and the cost is high.

Additionally, an existing express cabinet is generally provided with a communication module, the communication module adopts a 4G or even 5G module, and a power consumption ratio of the 4G/5G module is great, so that great energy consumption may be caused by delivery or fetching operation and daily maintenance communication, and there is a great challenge on the express cabinet device in a non-commercial-power power supply mode.

### Summary of the Invention

The present disclosure mainly solves problems of inconvenient installation of power supply by commercial power and complicated structure and high costs of power supply by solar energy in the prior art, and provides a Bluetooth cabinet control system designed by aiming at low power consumption of Bluetooth. Under the condition of not influencing the use by a user, higher endurance ability is achieved by using less batteries, and the cost performance is very high.

The present disclosure solves above technical problems through the following technical solution:
A Bluetooth cabinet control system includes:
a driving module, including a keyboard driving unit for typing in a signal for a main control module and door lock driving units for driving a cabinet door to open;
a communication module, including a Bluetooth unit communicated with a user and a 4G/5G unit communicated with a server;
a power supply module, configured to convert a same input power source into a power supply source adapting to each module unit; and
the main control module, connected with an enable of each of other module units and configured to control the corresponding module unit to enable according to an operating command.
The main control module is in a dormant state by default, and is woken up by a type-in signal of the keyboard driving unit or a Bluetooth connection signal of the Bluetooth unit.

According to this solution, the operating conditions of each module unit is controlled by controlling the enable to enable, and the energy consumption is greatly reduced. The Bluetooth cabinet control system is mainly designed by aiming at low power consumption of Bluetooth. Under the condition of not influencing the use by a user, higher endurance ability is achieved by using less batteries, and the cost performance is very high.

Preferably, the power supply module includes:
a standby power supply loop, configured to convert the input power source into a driving power source supplying electricity to the main control module, the Bluetooth unit and the keyboard driving unit;
a communication power supply loop, configured to convert the input power source into a driving power source of the 4G/5G unit; and
an unlocking power supply loop, configured to convert the input power source into a driving power source for driving a door lock to unlock and respectively connected to each of the door lock driving units.
The standby power supply loop is in a resident operating state, and the communication power supply loop and the unlocking power supply loop operate according to a corresponding control command after the main control module is woken up.

Various power supply loops are designed to start under different operating conditions, and the standby and operating consumption is greatly reduced.

Preferably, when the Bluetooth cabinet is in a standby state, the main control module is in a dormant state, and the Bluetooth module performs periodic broadcasting to wait for connection.
After press key input or Bluetooth connection, the main control module is woken up. The Bluetooth cabinet is in an operating state.
When the main control module requests to be communicated with the server, the main control module outputs an enable control signal to control the communication power supply loop to enable, the 4G/5G unit is electrified to operate, and the enabling of the communication power supply loop is stopped after the communication is completed or a rated time is reached.
When the main control module outputs an unlocking command, the unlocking power supply loop is controlled to enable, and after the corresponding door lock is driven to be unlocked through an unlocking control command, the enabling of the unlocking power supply loop is stopped.

A power supply mode in the standby state and the operating state is designed, and the standby and operating consumption is greatly reduced.

Preferably, a type-in signal output end of the keyboard driving unit is connected with a press key signal input end of the main control module; a press key driving enable signal output end of the main control module is connected with an enable of the keyboard driving unit; and the enable of the keyboard driving unit is connected with an energy-storage capacitor C1.

The energy consumption of an enable pin of the keyboard driving unit accounts for more than 50% of the energy consumption of a driving chip. In order to further reduce the energy consumption, the energy-storage capacitor C1 is used for energy storage. The energy-storage capacitor C1 is regularly charged, the keyboard driving unit is ensured to be in an active state, and system standby current is greatly reduced.

Preferably, each of the module units is disposed on a same circuit board; and a physical keyboard is separated from the keyboard driving unit. An MCU main chip is located on the same circuit board, the physical keyboard is separated from the driving chip, and a purpose is to avoid interference caused by long-distance IIC communication.

Preferably, either the Bluetooth unit or the 4G/5G unit operates. When an express is delivered or fetched through Bluetooth, the 4G/5G unit is not switched on, and the interaction with the server depends on a wireless network of a mobile phone APP. By using such a manner, the power consumption of the Bluetooth cabinet may be reduced. The 4G/5G unit may be switched on to report express fetching information to the server only after the keyboard express fetching is completed.

Preferably, a communication enable output end of the main control module is connected with an enable of the Bluetooth unit; and the communication enable output end of the main control module passes through a NOT gate and is then connected with an enable of the 4G/5G unit. The alternative selection of the Bluetooth unit and the 4G/5G unit is realized through hardware.

Preferably, an unlocking selection logic module is disposed between an unlocking command output end of the main control module and an enable of each door lock driving unit; and the corresponding door lock driving unit is enabled according to a door lock number of the unlocking command.

Preferably, a door lock selection logic module includes two 38 decoders and a plurality of AND gates; and each output end of the two 38 decoders is respectively and conveniently combined to be used as an input end of the AND gates, and an output end of the AND gates is connected with the enable of the corresponding door lock driving unit.

The outputs of the two 38 decoders are pairwise connected to form an output matrix, different pins are combined through the AND gates, and the corresponding door lock is driven to be unlocked.

The present disclosure has the following beneficial effects:
1. The Bluetooth cabinet control system is designed by aiming at low power consumption of Bluetooth. Under the condition of not influencing the use by a user, higher endurance ability is achieved by using less batteries, and the cost performance is very high.
2. The operating conditions of each module unit is controlled by controlling the enable to enable, and the energy consumption is greatly reduced.
3. Various power supply loops are designed to start under different operating conditions, and the standby and operating consumption is greatly reduced.
4. The MCU main chip is located on the same circuit board, the physical keyboard is separated from the driving chip, and the purpose is to avoid interference caused by long-distance IIC communication.
5. When an express is delivered or fetched through Bluetooth, the 4G/5G unit is not switched on, and the interaction with the server depends on a wireless network of a mobile phone APP, so that the power consumption of the Bluetooth cabinet may be reduced.

### Brief Description of the Drawings

FIG. 1 is a connection block diagram of a Bluetooth cabinet control system according to the present disclosure.
FIG. 2 is a keyboard connection block diagram according to the present disclosure.
FIG. 3 is a power supply block diagram of a main control board according to the present disclosure.

In the figures, 1 denotes a main control module, 2 denotes a power supply module, 3 denotes a keyboard driving unit, 4 denotes a door lock driving unit, 5 denotes a Bluetooth unit, and 6 denotes a 4G/5G unit.

### Detailed Description of the Invention

The technical solution of the present disclosure will be further illustrated in detail through embodiments in combination with accompanying drawings.

### Embodiment I:

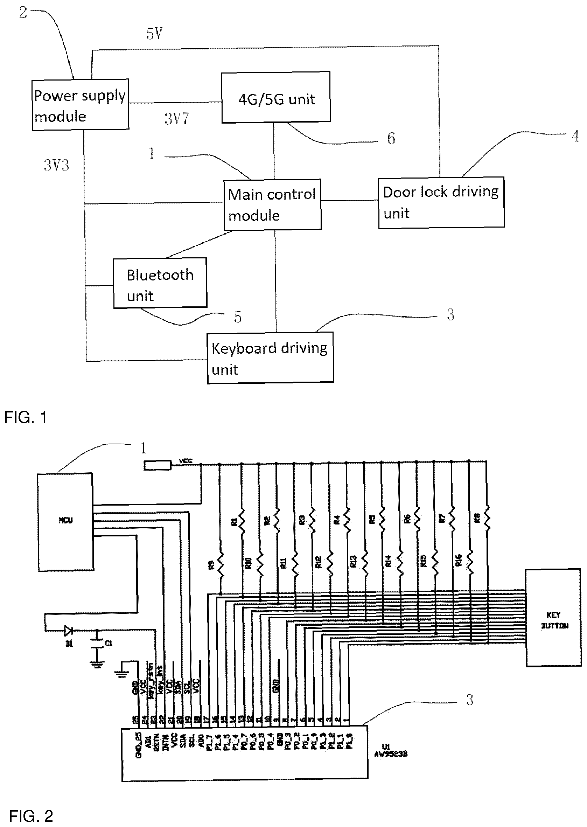

A Bluetooth cabinet control system of this embodiment, as shown in FIG. 1, includes a main control module 1, a power supply module 2, a keyboard driving unit 3, door lock driving units 4, a Bluetooth unit 5 and a 4G/5G unit 6.

The power supply module 2 converts a same input power source into a power supply source adapting to each module unit. In this embodiment, the input 12 V power source is converted into a driving power source adapting to each module to be connected to a power supply end of each module unit.

The main control module 1 is respectively connected to the enables of the keyboard driving unit 3 and the door lock driving units 4. The main control module 1 is respectively in communication connection with the Bluetooth unit 5 and the 4G/5G unit 6.

The main control module 1 is in a dormant state by default, and is woken up by a type-in signal of the keyboard driving unit 3 or a Bluetooth connection signal of the Bluetooth unit 5.

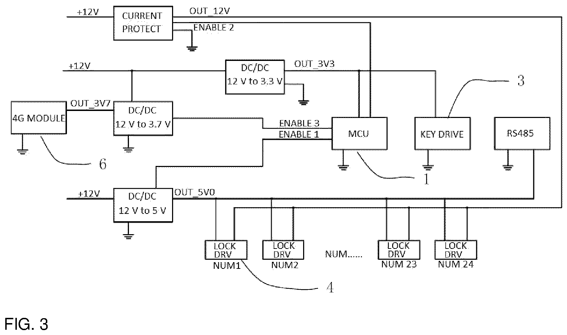

In this embodiment, the main control module 1 is an MCU chip. A specific circuit connection structure is as shown in FIG. 2 and FIG. 3. Each module unit is disposed on a same circuit board. The physical keyboard is separated from the keyboard driving unit 3.

The MCU main chip is located on the same circuit board, the physical keyboard is separated from a driving chip, and a purpose is to avoid interference caused by long-distance IIC communication.

The keyboard driving unit 3 transmits a type-in press key signal to the main control module 1. A type-in signal output end of the keyboard driving unit 3 is connected with a press key signal input end of the main control module 1. A press key driving enable signal output end of the main control module 1 is connected with an enable of the keyboard driving unit 3. The enable of the keyboard driving unit 3 is further connected with an energy-storage capacitor C1.

The energy consumption of an enable pin of the keyboard driving unit 3 accounts for more than 50% of the energy consumption of the driving chip. In order to further reduce the energy consumption, the energy-storage capacitor C1 is used for energy storage. The energy-storage capacitor C1 is regularly charged, the keyboard driving unit 3 is ensured to be in an active state, and system standby current is greatly reduced.

The keyboard driving unit 3 belongs to a low-power-consumption circuit. However, if a press key is pressed down, the keyboard driving unit 3 outputs a key-signal to the main control module 1, and the main control module 1 is woken up.

The power supply module of this embodiment includes a standby power supply loop, a communication power supply loop and an unlocking power supply loop.

The standby power supply loop converts the input power source into a driving power source of the main control module 1, the Bluetooth unit 5 and the keyboard driving unit 3.

In this embodiment, the standby power supply loop includes a 12 V to 3.3 V DC/DC conversion chip, a 3.3 V driving power source output by the 12 V to 3.3 V DC/DC conversion chip respectively supplies electricity to the main control module 1, the Bluetooth unit 5 and the keyboard driving unit 3.

The communication power supply loop converts the input power source into a driving power source of the 4G/5G unit 5.

In this embodiment, the communication power supply loop includes a 12 V to 3.7 V DC/DC conversion chip, an enable of the 12 V to 3.7 V DC/DC conversion chip is connected with a communication power supply control end of the main control module 1, and a 3.7 V power source output by the 12 V to 3.7 V DC/DC conversion chip supplies electricity to the 4G/5G unit 6.

The unlocking power supply loop converts the input power source into a driving power supply for driving a door lock to be unlocked, and the driving power supply is respectively connected to each of door lock driving units 4.

In this embodiment, a plurality of door lock driving units 4 are included. Each door lock driving unit 4 corresponds to one cabinet door. The unlocking power supply loop includes a 12 V to 5 V DC/DC conversion chip, and a 5 V power source output by the 12 V to 5 V DC/DC conversion chip respectively supplies electricity to the door lock driving units 4.

In the solution of this embodiment, the standby power supply loop is in a resident operating state, and the communication power supply loop and the unlocking power supply loop operate according to a corresponding control command after the main control module is woken up.

When the Bluetooth cabinet is in a standby state, the main control module is in a dormant state, and the Bluetooth module performs periodic broadcasting to wait for connection.

After press key input or Bluetooth connection, the main control module is woken up, and the Bluetooth cabinet is in an operating state.
When the main control module requests to be communicated with the server, the main control module outputs an enable control signal to control the communication power supply loop to enable, the 4G/5G unit is electrified to operate, and the enabling of the communication power supply loop is stopped after the communication is completed or a rated time is reached.

When the main control module outputs an unlocking command, the unlocking power supply loop is controlled to enable, and after the corresponding door lock is driven to be unlocked through an unlocking control command, the enabling of the unlocking power supply loop is stopped.

A power supply mode in the standby state and the operating state is designed, and the standby and operating consumption is greatly reduced.

The Bluetooth cabinet control system adopting the solution of this embodiment is mainly designed by aiming at low power consumption of Bluetooth. Under the condition of not influencing the use by a user, higher endurance ability is achieved by using less batteries, and the cost performance is very high. The operating conditions of each module unit is controlled by controlling the enable to enable, and the energy consumption is greatly reduced. Various power supply loops are designed to start under different operating conditions, and the standby and operating consumption is greatly reduced. The MCU main chip is located on the same circuit board, the physical keyboard is separated from a driving chip, and the purpose is to avoid interference caused by long-distance IIC communication.

### Embodiment II:

A Bluetooth cabinet control system of this embodiment has the following operation process:
1. A Bluetooth cabinet is switched on, and enters a sleep state to wait for waking after an initialization process.

### 1) Parameter initialization.

Program parameters in the Bluetooth cabinet are initialized.

### 2) Bluetooth connection initialization.

The Bluetooth unit 5 is switched on, the broadcasting is performed once at a rated time to wait for host connection. In this embodiment, the Bluetooth unit 5 operates in a slave mode, and the broadcasting is performed once every one second to wait for host connection.

### 3) Communication module initialization.

The 4G/5G unit 6 is switched on to detect whether there is offline data in a cache region or not. If there is offline data, the offline data is sent. Otherwise, the Bluetooth cabinet enters a sleep state after the Bluetooth cabinet state data is sent to the server.

If the offline data is successfully sent, the Bluetooth cabinet enters the sleep state after the Bluetooth cabinet state data is sent to the server. Otherwise, the Bluetooth cabinet directly enters the sleep state.

In this embodiment, the communication module adopts 4G/5G, the power consumption of the module accounts a great proportion in the power consumption of the whole machine. Therefore, the Bluetooth cabinet uses an HTTP transmission mode. The operating time of the module is reduced.

The power source of the 4G/5G unit 6 may be switched on only when key data needs to be transmitted. In addition, in a transmission process, a package mode is adopted for transmission to possibly reduce the transmission packages and time.

After the data transmission is completed in each time, the power supply of the 4G/5G unit 6 will be immediately switched off. If the data reporting has not been completed after the operating time of the 4G/5G unit 6 exceeds 3 minutes due to non-ideal network conditions, the Bluetooth cabinet will switch off a power source of a 4G module by force and stores data which has not be successfully reported into an offline buffer, and the data will be reported to the server when the Bluetooth cabinet is woken up in a next time.

2. The Bluetooth cabinet is woken up through Bluetooth connection or keyboard type-in, and expresses may be delivered or fetched. After express fetching, the 4G/5G unit 6 of the Bluetooth cabinet performs data interaction with the server.

A1: The Bluetooth cabinet is connected through Bluetooth by using a mobile terminal.

In this embodiment, the mobile terminal is a mobile phone. A deliveryman connects the Bluetooth cabinet through Bluetooth of the mobile phone.

A2: Authentication is performed.

If the authentication is successful, a Bluetooth cabinet box is opened, the deliveryman puts the express into the Bluetooth cabinet box, and an express fetching code is generated for the Bluetooth cabinet. If the authentication is failed, the Bluetooth connection is disconnected, and the Bluetooth cabinet enters the sleep state.

A3: The generated express fetching code is sent to the server through the mobile terminal, and the server sends the express fetching code to the corresponding user terminal.

A4: The Bluetooth connection is disconnected after the delivery is completed, and the Bluetooth cabinet enters the sleep state.

The interaction with the Bluetooth cabinet is realized by the deliveryman through the low-power-consumption Bluetooth, the generated express fetching code is sent to the server through the terminal of the deliveryman, and is then sent to a user by the server, and the power consumption of the Bluetooth cabinet is reduced under the condition of not influencing the normal operation.

Express fetching modes include a keyboard type-in express fetching mode, a Bluetooth connection express fetching mode and a 4G/5G unit remote express fetching mode.

In a case of Bluetooth express delivery or fetching, the 4G/5G unit 6 is not switched on, and the interaction with the server depends on a wireless network of a mobile phone APP to reduce the power consumption of the Bluetooth cabinet. The 4G/5G unit 6 may be switched on to report express fetching information to the server only after the keyboard express fetching is completed.

The keyboard type-in express fetching process includes the following:
B1: A user presses a key to wake up the Bluetooth cabinet, and inputs the express fetching code.
B2: If the express fetching code input is successful, the express fetching code is deleted after the corresponding box of the Bluetooth cabinet is open, and box open information is sent to the server through the 4G/5G unit 6.

If the express fetching code input is failed, the Bluetooth cabinet enters the sleep state.

B3: If the box open information sending is successful, the Bluetooth cabinet switches off the 4G/5G unit 6 and then enters the sleep state.

If the box open information sending is failed, the box open information is used as offline data to be stored into a cache region, then, the 4G/5G unit 6 is switched off, and the Bluetooth cabinet enters the sleep state.

The 4G/5G unit 6 may be switched on only after the keyboard express fetching is completed. The express fetching information is reported to the server, and the energy consumption of using the 4G/5G unit 6 is reduced.

A Bluetooth connection express fetching process includes the following:
C1: A user terminal wakes up the Bluetooth cabinet through Bluetooth connection.

In this embodiment, the user terminal is a mobile phone. The mobile phone of the user is connected to the Bluetooth cabinet through an APP via Bluetooth. After the connection, the Bluetooth cabinet is woken up automatically.

C2: If there is express fetching information in the user terminal, the process enters express fetching operation.

If there is no express fetching information in the user terminal, Bluetooth connection is disconnection, and the Bluetooth cabinet enters the sleep state.

The user checks whether there is the express fetching information or not through the APP. If YES, the user clicks "Fetch Expresses", the corresponding box door of the Bluetooth cabinet is open, the user may fetch the express. If NO, the Bluetooth cabinet enters the sleep state.

C3: After the express fetching is completed, the Bluetooth cabinet clears the express fetching code, the user terminal sends express fetching completion information to the server, and the Bluetooth cabinet enters the sleep state.

The express fetching completion information is reported to the server through the mobile phone APP of the user.

The interaction with the Bluetooth cabinet is realized by the user through the Bluetooth, the user terminal interacts with the server, the switched-on use of the 4G/5G unit 6 is reduced, and the energy consumption is reduced.

A remote express fetching process of the 4G/5G unit 6 includes the following:
D1: The user obtains and types in a wake-up code through a keyboard.

The remote express fetching of the 4G/5G unit 6 may be adopted only when the mobile terminal of the user is lack of a Bluetooth function or the express fetching code is forgot, and the wake-up code is obtained through contact with customer service by telephone.

The user wakes up the Bluetooth cabinet by pressing the numeric keypad on the Bluetooth cabinet, and inputting the wake-up code.

D2: The Bluetooth cabinet builds connection with the server through the 4G/5G unit 6.

D3: The server sends a box open command to the Bluetooth cabinet. After the box is opened, and the express fetching code is cleared, the Bluetooth cabinet enters the sleep state.

The server automatically sends the box opening command, and sends an updated 4G wake-up code to the Bluetooth cabinet. The corresponding cabinet door of the Bluetooth cabinet is open, the own code fetching code is cleared, and then, the Bluetooth cabinet enters the sleep state.

3. The Bluetooth cabinet enters the sleep state according to the Bluetooth state, the press key state and the state of the 4G/5G unit 6.

The Bluetooth cabinet enters the sleep state under the following conditions:
In a case that the Bluetooth is unconnected, and the 4G/5G unit 6 is not switched on, if there is no type in on a keyboard for more than a first rated time, the Bluetooth cabinet enters the sleep state.

In a case that the 4G/5G unit 6 is not switched on, and the Bluetooth is connected, if there is no Bluetooth operation for more than a second rated time, and there is no type-in on the keyboard for more than the first rated time, the Bluetooth cabinet enters the sleep state.

In a case that the Bluetooth is unconnected, and the 4G/5G unit 6 is switched on, if data sending has been completed or the data sending has not been completed for more than a third rated time, and there is no type-in on the keyboard for more than the first rated time, the Bluetooth cabinet enters the sleep state.

In this embodiment, the first rated time is 10 seconds, the second rated time is 30 seconds, and the third rated time is 3 minutes. The Bluetooth cabinet is in a deep sleep state for the most time, and the energy consumption is reduced.

The Bluetooth cabinet using the solution of this embodiment is in the deep sleep state for the most time, and is woken up only when the operation by the user is needed. The data interaction between the user and the Bluetooth cabinet is realized through the low-power-consumption Bluetooth, or the data interaction with the server is realized by using the mobile terminal of the user, and the 4G/5G unit 6 is used only for important data transmission, so that higher endurance ability is achieved by using less batteries under the condition of not influencing the use by the user, and the cost performance is improved.

### Embodiment III:

A Bluetooth cabinet control system of this embodiment optimizes an operating mode of a Bluetooth unit 5 and a 4G/5G unit 6.

Either the Bluetooth unit 5 or the 4G/5G unit 6 operates.

A communication enable output end of a main control module 1 is connected with an enable of the Bluetooth unit 5; and the communication enable output end of the main control module 1 passes through a NOT gate and is then connected with an enable of the 4G/5G unit 6.

The alternative selection of the Bluetooth unit and the 4G/5G unit is realized through hardware.

When an express is delivered or fetched through Bluetooth, the 4G/5G unit is not switched on, and the interaction with the server depends on a wireless network of a mobile phone APP. By using such a manner, the power consumption of the Bluetooth cabinet may be reduced. The 4G/5G unit may be switched on to report express fetching information to the server only after the keyboard express fetching is completed.

According to the solution of this embodiment, only the operating mode of the Bluetooth unit 5 and the 4G/5G unit 6 is optimized, and other contents are the same as those in Embodiment I.

### Embodiment IV:

A Bluetooth cabinet control system of this embodiment is provided with an unlocking selection logic module between an unlocking command output end of a main control module 1 and an enable of each door lock driving unit 4.

A corresponding door lock driving unit is enabled according to a door lock number of the unlocking command.

The door lock selection logic module of this embodiment includes two 38 decoders and a plurality of AND gates.

Each output end of the two 38 decoders is respectively and conveniently combined to be used as an input end of the AND gates, and an output end of the AND gates is connected with the enable of the corresponding door lock driving unit.

The outputs of the two 38 decoders are pairwise connected to form an output matrix, different pins are combined through the AND gates, and a corresponding door lock is driven to be unlocked.

It should be understood that, the embodiments are used only to illustrate the present disclosure but not intended to limit the scope of the present disclosure. Additionally, it should be understood that after reading the contents taught in the present disclosure, those skilled in the art may make various alterations or modifications to the present disclosure, and these equivalent forms also fall within the scopes of the claims attached to this application.

## Claims

1. A Bluetooth cabinet control system, comprising:
a driving module, comprising a keyboard driving unit for typing in a signal for a main control module and door lock driving units for driving a cabinet door to open;
a communication module, comprising a Bluetooth unit communicated with a user and a 4G/5G unit communicated with a server;
a power supply module, configured to convert a same input power source into a power supply source adapting to each module unit; and
the main control module, connected with an enable of each of other module units and configured to control the corresponding module unit to enable according to an operating command, wherein the main control module is in a dormant state by default, and is woken up by a type-in signal of the keyboard driving unit or a Bluetooth connection signal of the Bluetooth

2. The Bluetooth cabinet control system according to claim 1, wherein the power supply module comprises:
a standby power supply loop, configured to convert the input power source into a driving power source of the main control module, the Bluetooth unit and the keyboard driving unit;
a communication power supply loop, configured to convert the input power source into a driving power source of the 4G/5G unit; and
an unlocking power supply loop, configured to convert the input power source into a driving power source for driving a door lock to unlock and respectively connected to each of the door lock driving units, wherein
the standby power supply loop is in a resident operating state, and the communication power supply loop and the unlocking power supply loop operate according to a corresponding control command after the main control module is woken up.

3. The Bluetooth cabinet control system according to claim 1 or 2, wherein when the Bluetooth cabinet is in a standby state, the main control module is in a dormant state, and the Bluetooth module performs periodic broadcasting to wait for connection;
after press key input or Bluetooth connection, the main control module is woken up, and the Bluetooth cabinet is in an operating state;
when the main control module requests to be communicated with the server, the main control module outputs an enable control signal to control the communication power supply loop to enable, the 4G/5G unit is electrified to operate, and the enabling of the communication power supply loop is stopped after the communication is completed or a rated time is reached; and
when the main control module outputs an unlocking command, the unlocking power supply loop is controlled to enable, and after the corresponding door lock is driven to be unlocked through an unlocking control command, the enabling of the unlocking power supply loop is stopped.

4. The Bluetooth cabinet control system according to claim 1 or 2, wherein a type-in signal output end of the keyboard driving unit is connected with a press key signal input end of the main control module; a press key driving enable signal output end of the main control module is connected with an enable of the keyboard driving unit; and the enable of the keyboard driving unit is connected with an energy-storage capacitor C1.

5. The Bluetooth cabinet control system according to claim 4, wherein each of the module units is disposed on a same circuit board; and a physical keyboard is separated from the keyboard driving unit.

6. The Bluetooth cabinet control system according to claim 1 or 2, wherein either the Bluetooth unit or the 4G/5G unit operates.

7. The Bluetooth cabinet control system according to claim 6, wherein a communication enable output end of the main control module is connected with an enable of the Bluetooth unit; and the communication enable output end of the main control module passes through a NOT gate and is then connected with an enable of the 4G/5G unit.

8. The Bluetooth cabinet control system according to claim 3, wherein an unlocking selection logic module is disposed between an unlocking command output end of the main control module and an enable of each door lock driving unit; and the corresponding door lock driving unit is enabled according to a door lock number of the unlocking command.

9. The Bluetooth cabinet control system according to claim 8, wherein a door lock selection logic module comprises two 38 decoders and a plurality of AND gates; and each output end of the two 38 decoders is respectively and conveniently combined to be used as an input end of the AND gates, and an output end of the AND gates is connected with the enable of the corresponding door lock driving unit.
